# EUROPEAN PATENT SPECIFICATION

(11) **EP 3 909 782 B1**
(45) Date of publication and mention of the grant of the patent: **02.07.2025**
(21) Application number: 21173624.4
(22) Date of filing: 12.05.2021
(51) Int. Cl.: B41M 7/00, B41J 11/00, C09D 11/324, C09D 11/106, C09D 11/107

(54) **IMAGE FORMING DEVICE AND IMAGE FORMING METHOD**
BILDERZEUGUNGSVORRICHTUNG UND BILDERZEUGUNGSVERFAHREN
DISPOSITIF ET PROCÉDÉ DE FORMATION D'IMAGES

(30) Priority: 14.05.2020 JP 2020085067; 05.03.2021 JP 2021035493
(43) Date of publication of application: 17.11.2021
(73) Proprietor: Ricoh Company, Ltd., Tokyo 143-8555 (JP)
(72) Inventor: KUROHA, Mizuki, Tokyo, 143-8555 (JP); YOKOHAMA, Yuuki, Tokyo, 143-8555 (JP); MIYAAKE, Azumi, Tokyo, 143-8555 (JP); TAKAHASHI, Satoshi, Tokyo, 143-8555 (JP); OYAMA, Koichiro, Tokyo, 143-8555 (JP); SUGITA, Kento, Tokyo, 143-8555 (JP)
(74) Representative: Marks & Clerk LLP

(56) References cited:
- WO-A1-2014/045969

## Description

### BACKGROUND

### Technical Field

The present disclosure relates to an image forming device and an image forming method.

### Description of the Related Art

Inkjet printing produces text and images on recording media by directly discharging ink droplets from extremely fine nozzles to attach the ink droplets to the recording media.

Image forming utilizing inkjet printing is widely used in industrial settings. With the development of inkjet printing technologies, printing performance has been improved. For such high performance, image forming methods are desired using an ink having an excellent drying property and fixability to produce text and images having high coloring ability and high gloss.

Aqueous ink using water as the main component is widely used because it is safe and cost-effective. In high speed printing, heat drying is widely used to quickly evaporate water and the solvent in ink. However, printed medium waves (also referred to as paper waving) because moisture in the printed medium (recording medium) is also lost during drying the image. Unlike roll paper, this waving readily occurs to cut sheets because the tension applied to a printed medium is small during printing and drying.

The image density and the feel of gloss of an image deteriorate by carbon black exposed to the surface of the image as the printed black ink containing carbon black pigments is heated and dried. A technique of printing black on plain paper with black ink and on gloss paper and matte paper with an ink having color other than black has been proposed in Japanese unexamined patent application publication No. 2002-327138

A technique of printing on special paper such as gloss paper, semi-gloss paper, and matte paper with three-color composite ink of cyan, magenta, and yellow without black have been proposed in Japanese unexamined patent application publication Nos. 2006-140655, 2004-82709, and 2000-225719. Another technique of applying clear ink on an image to enhance the degree of gloss has been proposed in Japanese unexamined patent application publication No. 2016-196177.

The method of using different types of inks for different paper types proposed in Japanese unexamined patent application publication No. 2002-327138 mentioned above and the method of applying clear ink onto images disclosed in Japanese unexamined patent application publication No. 2016-196177 mentioned above require more ink tanks or heads and need a large subsystem for head maintenance and recovery. These additional items increase the cost; it is not sufficient to reduce waving of printed media and strike a balance between drying property and image density

When black of such composite inks disclosed in Japanese unexamined patent application publication Nos. 2006-140655, 2004-82709, and 2000-225719 mentioned above is used for reproducing black, achromatic portions are readily colored because black is reproduced without using a black ink. Also, the gradation of black is reproduced by mixing three colors, which leads to a problem of cost increase.
WO2014045969 Al discloses a method for forming an image, including an ink transfer step for transferring to a recording medium an ink composition including a colorant, water, a polymerizable compound, and polymer particles having a glass transition temperature of 80-150°C, and recording an image, a drying step for drying the image, a curing step for curing the image by irradiating active energy rays to the dried image, a cooling step for cooling the cured image so that the temperature difference before and after cooling is at least 15°C, and an accumulation step for stacking an accumulating a plurality of sheets of the cooled recording medium.

### SUMMARY

According to the present disclosure, an image forming device is provided which can strike a balance between the image density and image drying property while minimizing waving of recording media.

Specifically, the invention provides an image forming device according to claim 1, and an image forming method according to claim 5.

### BRIEF DESCRIPTION OF THE SEVERAL VIEWS OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:
FIG. 1 is a diagram illustrating a side view of an image forming device according to an embodiment of the present disclosure;
FIG. 2 is a diagram illustrating a planar view of the image forming device according to the embodiment of the present disclosure illustrated in FIG. 1;
FIG. 3 is a diagram illustrating a planar view of a head according to the embodiment of the present disclosure illustrated in FIG. 1 and
FIG. 4 is a diagram illustrating a total view of an image forming device according to another embodiment of the present disclosure.

The accompanying drawings are intended to depict example embodiments of the present invention and should not be interpreted to limit the scope thereof. The accompanying drawings are not to be considered as drawn to scale unless explicitly noted. Also, identical or similar reference numerals designate identical or similar components throughout the several views.

### DESCRIPTION OF THE EMBODIMENTS

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

As used herein, the singular forms "a", "an", and "the" are intended to include the plural forms as well, unless the context clearly indicates otherwise.

Moreover, image forming, recording, printing, modeling, etc., in the present disclosure represent the same meaning, unless otherwise specified.
Embodiments of the present invention are described in detail below with reference to accompanying drawing(s). In describing embodiments illustrated in the drawing(s), specific terminology is employed for the sake of clarity. However, the disclosure of this patent specification is not intended to be limited to the specific terminology so selected, and it is to be understood that each specific element includes all technical equivalents that have a similar function, operate in a similar manner, and achieve a similar result.

For the sake of simplicity, the same reference number will be given to identical constituent elements such as parts and materials having the same functions and redundant descriptions thereof omitted unless otherwise stated.

Hereinafter, the image forming device and the image forming method of the present disclosure are described with reference to the accompanying drawings. It is to be noted that the following embodiments are not limiting the present disclosure and any deletion, addition, modification, change, etc., can be made within a scope in which man in the art can conceive including other embodiments, and any of which is included within the scope of the present disclosure as long as the effect and feature of the present disclosure are demonstrated.

Images heated and dried at the minimum film-forming temperature or higher have good fixability owing to the film-forming of the resin contained in ink. When a color ink containing a pigment other than carbon black is heated and dried, the resin in the color ink forms film, which makes a smooth surface of an image and enhances the image density.

In the case of black ink containing carbon black, the surface of an image becomes rough owing to carbon black exposed to the surface when the resin forms film by heat-drying; the image density deteriorates. For this reason, as the glass transition temperature (Tg) of the resin contained in ink lowers, the minimum film-forming temperature lowers; although the heat energy required for film-forming decreases, the image density of black image after drying lowers. Conversely, the image density of black is high when the Tg of the resin in ink is high; however, the heat energy required for film-forming of resin increases.

If an image is heat-dried at high temperatures, the surface becomes rough because the resin quickly forms film. Such an increase in roughness leads to a decrease in the image density, which can be prevented by drying at low temperatures. Images requiring a small drying energy and having a high image density can be possibly obtained by drying black ink containing a resin having a low Tg and a resin having a high Tg at lower temperatures for a long period of time.

The present inventors have found that the image density of black ink can be prevented from deteriorating with a method of heat-drying by exposure to energy lines when the image temperature rises too high.

The present inventors have also found that a coloring material contained in ink absorbs ultraviolet radiation and visible light emitted to an image and produces heat; the printed portions alone are heated so that the moisture and the solvent in the ink evaporate. Since the non-printed portion is not heated, the recording medium is not unnecessarily heated; evaporation of the moisture thereof can be minimized. For this reason, the recording medium is prevented from waving. Utilizing ultraviolet radiation and visible light is effective to aqueous ink containing moisture in an amount of 50 percent or more because aqueous ink has high drying property but is subject to paper waving.

The present inventors have formulated the image forming device of the present disclosure on a basis of the knowledge described above.

The image forming device of the present disclosure includes a black ink containing water, an organic solvent, carbon black, a resin A, and a resin B, a black ink applying device (410k;101) configured to apply the black ink to a recording medium; and an irradiator (54;301) configured to expose the recording medium onto which the black ink has been applied to visible light or ultraviolet radiation having a wavelength of 700 nm or less, wherein the resin A and the resin B satisfy the following relationship: Tg_{A} < Tᵢ < Tg_{B}, where Tg_{A} represents a glass transition temperature of the resin A, Tg_{B} represents a glass transition temperature of the resin B, and Ti represents a surface temperature of an image on the recording medium after the recording medium is exposed to the visible light or ultraviolet radiation. Waving of recording media is minimized by the image forming device so that it is possible to strike a balance between the image density and the image drying property.

The image forming method of the present disclosure includes applying a black ink to a recording medium and exposing the recording medium onto which the black ink has been applied to visible light or ultraviolet radiation having a wavelength of 700 nm or less, wherein the black ink contains water, an organic solvent, carbon black, a resin A, and a resin B, wherein the resin A and the resin B satisfy the following relationship: Tg_{A} < Tᵢ < Tg_{B}, where Tg_{A} represents the glass transition temperature of the resin A, Tg_{B} represents the glass transition temperature of the resin B, and Ti represents the surface temperature of an image on the recording medium after the recording medium is exposed to the visible light or ultraviolet radiation.

The image forming device of the present disclosure may furthermore optionally include a color ink applying device for applying color ink containing water, an organic solvent, a coloring material, and a resin C to the recording medium. It is preferable that Tg_{C} < Tᵢ, where Tgc represents the glass transition temperature of the resin C.

The drying property of the color ink can be enhanced under this relationship. The image forming method of the present disclosure may furthermore optionally include a color ink application process.

### Ink

The ink for use in the present disclosure is described.

The black ink for use in the present disclosure contains water, an organic solvent, carbon black, a resin A, and a resin B. The color ink for use in the present disclosure contains water, an organic solvent, a coloring material, and a resin C.

The ink for use in the present disclosure preferably contains carbon black or a coloring material in a form of pigment dispersion and furthermore contains other optional components. Ink means both the black ink and color ink unless otherwise specified.

### Carbon Black

Specific examples of carbon black (C.I.Pigment Black 7) in the black ink include, but are not limited to, furness black, lamp black, acetylene black, and channel black.

The proportion of carbon black in the black ink is preferably from 2 to 10 percent by mass and more preferably from 4 to 7 percent by mass.

### Coloring Material

The coloring material has no particular limit and includes pigments and dyes.

The pigment includes an inorganic pigment or an organic pigment. These can be used alone or in combination. In addition, a mixed crystal can also be used as the coloring material.

Examples of the pigments include, but are not limited to, black pigments, yellow pigments, magenta pigments, cyan pigments, white pigments, green pigments, orange pigments, and gloss or metallic pigments of gold, silver, and others.

Specific examples of the inorganic pigments include, but are not limited to, titanium oxide, iron oxide, calcium oxide, barium sulfate, aluminum hydroxide, barium yellow, cadmium red, and chrome yellow.

Specific examples of the organic pigment include, but are not limited to, azo pigments, polycyclic pigments (e.g., phthalocyanine pigments, perylene pigments, perinone pigments, anthraquinone pigments, quinacridone pigments, dioxazine pigments, indigo pigments, thioindigo pigments, isoindolinone pigments, and quinophthalone pigments), dye chelates (e.g., basic dye type chelates and acid dye type chelates), nitro pigments, nitroso pigments, and aniline black. Of those pigments, pigments having good affinity with solvents are preferable. Also, hollow resin particles and hollow inorganic particles can be used.

Specific examples of the pigments for black include, but are not limited to, metals such as copper, iron (C.I.Pigment Black 11), and titanium oxide and an organic pigment such as aniline black (C.I. Pigment Black 1).

Specific examples of the pigments for color include, but are not limited to, C.I. Pigment Yellow 1, 3, 12, 13, 14, 17, 24, 34, 35, 37, 42 (yellow iron oxide), 53, 55, 74, 81, 83, 95, 97, 98, 100, 101, 104, 108, 109, 110, 117, 120, 138, 150, 153, 155, 180, 185, and 213; C.I. Pigment Orange 5, 13, 16, 17, 36, 43, and 51, C.I. Pigment Red 1, 2, 3, 5, 17, 22, 23, 31, 38, 48:2, 48:2 {Permanent Red 2B(Ca)}, 48:3, 48:4, 49:1, 52:2, 53:1, 57:1 (Brilliant Carmine 6B), 60:1, 63:1, 63:2, 64:1, 81, 83, 88, 101 (rouge), 104, 105, 106, 108 (Cadmium Red), 112, 114, 122 (Quinacridone Magenta), 123, 146, 149, 166, 168, 170, 172, 177, 178, 179, 184, 185, 190, 193, 202, 207, 208, 209, 213, 219, 224, 254, and 264; C.I. Pigment Violet 1 (Rhodamine Lake), 3, 5:1, 16, 19, 23, and 38; C.I. Pigment Blue 1, 2, 15 (Phthalocyanine Blue), 15:1, 15:2, 15:3, 15:4, (Phthalocyanine Blue), 16, 17:1, 56, 60, and 63, C.I. Pigment Green 1, 4, 7, 8, 10, 17, 18, and 36.

The dye is not particularly limited and includes, for example, acidic dyes, direct dyes, reactive dyes, basic dyes. These can be used alone or in combination.

Specific examples of the dye include, but are not limited to, C.I. Acid Yellow 17, 23, 42, 44, 79, and 142, C.I. Acid Red 52, 80, 82, 249, 254, and 289, C.I. Acid Blue 9, 45, and 249, C.I. Acid Black 1, 2, 24, and 94, C. I. Food Black 1 and 2, C.I. Direct Yellow 1, 12, 24, 33, 50, 55, 58, 86, 132, 142, 144, and 173, C.I. Direct Red 1, 4, 9, 80, 81, 225, and 227, C.I. Direct Blue 1, 2, 15, 71, 86, 87, 98, 165, 199, and 202, C.I. Direct Black 19, 38, 51, 71, 154, 168, 171, and 195, C.I. Reactive Red 14, 32, 55, 79, and 249, and C.I. Reactive Black 3, 4, and 35.

The proportion of the coloring material in the ink is preferably from 0.1 to 15 percent by mass and more preferably from 1 to 10 percent by mass to enhance the image density, fixability, and discharging stability.

The ink is obtained by introducing a hydrophilic functional group into a pigment to prepare a self-dispersible pigment, coating the surface of a pigment with a resin followed by dispersion, or using a dispersant to disperse a pigment.

One way of preparing a self-dispersible pigment by introducing a hydrophilic functional group into a pigment is to add a functional group such as a sulfone group and carboxyl group to a pigment (e.g., carbon) to disperse the pigment in water.

One way of dispersing a resin by coating the surface thereof is to encapsulate a pigment in a microcapsule to make it disperse in water. This can be referred to as a resin-coated pigment. In this case, all the pigments to be added to ink are not necessarily entirely coated with a resin. Pigments partially or wholly uncovered with a resin are allowed to be dispersed in the ink unless such pigments have an adverse impact.

When a dispersant is used, a known dispersant having a small or large molecular weight, represented by a surfactant, is used.

It is possible to select an anionic surfactant, a cationic surfactant, a nonionic surfactant, an amphoteric surfactant, or others depending on a pigment.

Also, a nonionic surfactant (RT-100, manufactured by TAKEMOTO OIL & FAT CO., LTD.) and a formalin condensate of naphthalene sodium sulfonate are suitable as the dispersant.

Those can be used alone or in combination.

The ink can be obtained by mixing a pigment with materials such as water and an organic solvent. It is also possible to mix a pigment with water, a dispersant, and other substances to prepare a pigment dispersion and thereafter mix the pigment dispersion with materials such as water and an organic solvent to manufacture an ink.

The pigment dispersion is obtained by mixing and dispersing water, a pigment, a pigment dispersant, and other optional components and controlling the particle size. It is good to use a dispersing device for dispersion.

The particle diameter of the pigment in the pigment dispersion has no particular limit. For example, the maximum frequency is preferably from 20 to 500 nm and more preferably from 20 to 150 nm in the maximum number conversion to improve dispersion stability of the pigment and ameliorate discharging stability and the image quality such as image density. The particle diameter of the pigment can be analyzed using a particle size analyzer (Nanotrac Wave-UT151, manufactured by MicrotracBEL Corp).

The proportion of the pigment in the pigment dispersion is not particularly limited and can be suitably selected to suit a particular application. In terms of improving discharging stability and image density, the proportion is preferably from 2.0 to 8.0 percent by mass and more preferably from 3.5 to 7.0 percent by mass.

It is preferable that the pigment dispersion be filtered with an instrument such as filter and a centrifuge to remove coarse particles followed by deaerating.

### Organic Solvent

There is no specific limitation to the organic solvent for use in the present disclosure. For example, a water-soluble organic solvent can be used. Examples include, but are not limited to, polyhydric alcohols, ethers such as polyhydric alcohol alkylethers and polyhydric alcohol arylethers, nitrogen-containing heterocyclic compounds, amides, amines, and sulfur-containing compounds.

Specific examples include, but are not limited to, polyols such as ethylene glycol, diethylene glycol, 1,2-propanediol, 1,3-propanediol, 1,2-butanediol, 1,3-butanediol, 1,4-butanediol, 2,3-butanediol, 3-methyl-1,3-butane diol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl-1,2,4-butane triol, 1,2,3-butanetriol, 2,2,4-trimethyl-1,3-pentanediol, and petriol; polyol alkylethers such as ethylene glycol monoethylether, ethylene glycol monobutyl ether, diethylene glycol monomethylether, diethylene glycol monoethylether, diethylene glycol monobutyl ether, tetraethylene glycol monomethylether, and propylene glycol monoethylether; polyol arylethers such as ethylene glycol monophenylether and ethylene glycol monobenzylether; nitrogen-containing heterocyclic compounds such as 2-pyrrolidone, N-methyl-2-pyrrolidone, N-hydroxyethyl-2-pyrrolidone, 1,3-dimethyl-2-imidazolidinone, ε-caprolactam, and γ-butyrolactone; amides such as formamide, N-methylformamide, N,N-dimethylformamide, 3-methoxy-N,N-dimethyl propionamide, and 3-butoxy-N,N-dimethyl propionamide; amines such as monoethanolamine, diethanolamine, and triethylamine; sulfur-containing compounds such as dimethyl sulfoxide, sulfolane, and thiodiethanol; propylene carbonate, and ethylene carbonate.

It is preferable to use an organic solvent having a boiling point of 250 or lower degrees C, which serves as a humectant and imparts a good drying property at the same time.

Polyol compounds having eight or more carbon atoms and glycol ether compounds are also suitable.

Specific examples of the polyol compounds having eight or more carbon atoms include, but are not limited to, 2-ethyl-1,3-hexanediol and 2,2,4-trimethyl-1,3-pentanediol.

Specific examples of the glycolether compounds include, but are not limited to, polyhydric alcohol alkylethers such as ethylene glycol monoethylether, ethylene glycol monobutylether, diethylene glycol monomethylether, diethylene glycol monoethylether, diethylene glycol monobutylether, tetraethylene glycol monomethylether, and propylene glycol monoethylether and polyhydric alcohol arylethers such as ethylene glycol monophenylether and ethylene glycol monobenzylether.

It is preferable to contain an amide solvent, 3-ethyl-3-hydroxymethyl oxetane, and propylene glycol monomethyl ether when a resin is used.

Specific examples of the amide solvent include, but are not limited to, 3-methoxy-N,N-dimethyl propionamide, 3-ethoxy-N,N-dimethyl propionamide, and 3-butoxy-N,N-dimethyl propionamide.

These can be used alone or in combination. Of these, 3-methoxy-N,N-dimethyl propionamide and 3-butoxy-N,N-dimethyl propionamide are more preferable to enhance film-forming property of a resin and improve abrasion resistance.

The boiling point of the organic solvent is preferably from 180 to 300 degrees C. When the boiling point of the organic solvent is 180 degrees C or higher, the evaporation speed of the organic solvent during drying can be suitably controlled. Also, the ink has a leveling property enough to reduce the roughness of the surface of an image such that glossiness is enhanced. An organic solvent having a boiling point of 300 degrees C or lower enhances the drying property of the ink

The proportion of the organic solvent in the ink has no particular limit and can be suitably selected to suit to a particular application. In terms of drying and discharging reliability of the ink, the proportion is preferably from 10 to 60 percent by mass and more preferably from 20 to 60 percent by mass.

The proportion of the amide solvent in the ink is preferably from 0.05 to 10 percent by mass and more preferably from 0.1 to 5 percent by mass.

Diethylene glycol and/or triethylene glycol is preferably included in the ink to enhance discharging stability for continuous image forming and obtain an ink having a high vapor pressure and good drying property at high temperatures.

The proportion of diethylene glycol and/or triethylene glycol in the ink is more preferably from 1 to 10 percent by mass and more preferably from 3 to 6 percent by mass. When the proportion is 1 percent by mass or more, discharging stability is further improved. When the proportion is 10 percent by mass or less, the amount of the organic solvent present on the image portion on a recording medium is small enough to minimize plasticizing resins so that fixability can be maintained and image transfer to a heated roller can be thus prevented.

### Resin

The type of the resin contained in the ink has no particular limit and can be suitably selected to suit to a particular application. Examples include, but are not limited to, urethane resins, polyester resins, acrylic-based resins, vinyl acetate-based resins, styrene-based resins, butadiene-based resins, styrene-butadiene-based resins, vinylchloride-based resins, acrylic styrene-based resins, and acrylic silicone-based resins.

Of these, it is preferable to use a styrene acrylic resin. It is preferable that both of the resin A and the resin B are styrene acrylic resins. It is preferable that the resin C contained in the color ink be preferably a styrene acrylic resin.

Resin particles made of such resins can be also used. It is possible to mix a resin emulsion in which such resin particles are dispersed in water as a dispersion medium with materials such as a coloring material and an organic solvent to obtain an ink. It is possible to use suitably-synthesized resin particles as the resin particle. Alternatively, the resin particle available on the market can be used. The resin particle can be used alone or two or more type of the resin particles can be used in combination.

Moreover, of the resin particles mentioned above, acrylic resin particles are widely used because they are inexpensive and have good discharging stability.

Examples of the acrylic resin particles include, but are not limited to, acrylic silicone resin particles and styrene-acrylic resin particles. These can be used alone or in combination. Of these, styrene acrylic resin particles are preferable to enhance the abrasion resistance and drying property because they do not readily take in the solvent in ink.

Styrene acrylic resin particles can be formed by emulsion polymerization, dispersion polymerization, suspension polymerization, pulverization or solution/bulk polymerization followed by emulsification.

Styrene acrylic resin particles can be procured.

Specific examples of procured styrene acrylic resin particles include, but are not limited to, J-352, J-390, J-450, J-511, J-734, J-741, J-775, J-840, J-7100, J-7600, HPD-71, HRC-1645, JDX-5050, and PDX-6102B (all manufactured by BASF SE), and UC-3900 (manufactured by TOAGOSEI CO., LTD.).

There is no specific limitation to the form and the volume average particle diameter of the resin particles and it can be suitably selected to suit to a particular application. The volume average particle diameter is preferably from 10 to 1,000 nm, more preferably from 10 to 200 nm, and furthermore preferably from 10 to 100 nm to achieve good image hardness.

The volume average particle diameter can be measured by using a device such as a particle size analyzer (Nanotrac Wave-UT151, manufactured by MicrotracBEL Corp.).

The proportion of the resin in the ink is preferably from 2.0 to 12 percent by mass. A proportion of 2.0 percent by mass or greater enhances the fixability. A proportion of 12.0 percent by mass or less prevents deterioration of the discharging stability and storage stability of the ink. More preferably, it is from 3.0 to 8.0 percent by mass.

The black ink in the present embodiment may contain a resin other than the resin A and the resin B but preferably contains the resin A and the resin B alone. The proportion of the resins other than the resin A and the resin B in the ink is preferably 2 percent by mass or less and more preferably 1 percent by mass or less.

The color ink in the present embodiment may contain a resin other than the resin C but preferably contain the resin C alone. The proportion of the resins other than the resin C in the ink is preferably 2 percent by mass or less and more preferably 1 percent by mass or less.

The resin A and the resin B contained in the black ink are selected to satisfy the following relationship: TG_{A} < Ti < TG_{B}. The drying property deteriorates when Tᵢ < TG_{A}, TG_{B}. The image density ant the drying property deteriorate when Tᵢ > TG_{A}, TG_{B}.

The glass transition temperature (Tg) of the resin is preferably from 20 to 150 degrees C. Of the two types of the resins, the glass transition temperature TG_{A} of the resin A is preferably from 20 to 50 degrees C. A TG_{A} of 20 degrees C or higher enhances the storage stability of the ink. The film of images can be suitably formed owing to drying at a TG_{A} of from 20 to 50 degrees C to enhance the drying property.

The glass transition temperature TG_{B} of the resin B is preferably from 80 to 150 degrees C. A TG_{B} of 80 degrees C or higher enhances the image density of black ink and a TG_{B} of 150 degrees C or lower enhances the drying property.

It is preferable that 20 degrees C ≤ Tg_{A} ≤ 50 degrees C, 80 degrees C ≤ Tg_{B} ≤ 150 degrees C, and 50 degrees C < Tᵢ < 80 degrees C. Under such conditions, the image density and the drying property can be further enhanced.

The Tg of the resin in the color ink containing a pigment other than carbon black is preferably from 20 to 80 degrees C. The image density and the drying property can be enhanced because the film of the image can be suitably formed by drying in this range. The Tg of the resin C satisfying the relationship: TGc < Tᵢ is preferably from 20 to 80 degrees C to enhance the image density and the drying property.

The glass transition temperature in the present specification can be measured by the method according to JIS K7121 format, for example, a differential scanning calorimeter (DSC) (Thermo plus EVO2/DSC, manufactured by Rigaku Corporation) at a measurement temperature of from 30 to 300 degrees C at a temperature rising speed of 2.5 degrees C per minute.

Dried matter obtained by drying 5 g of ink at 50 degrees C for 10 hours is used for measuring the temperature peaks of the ink according to JIS K7121 format, for example, a differential scanning calorimeter (DSC) (Thermo plus EVO2/DSC, manufactured by Rigaku Corporation) at a measurement temperature of from 30 to 300 degrees C at a temperature rising speed of 2.5 degrees C per minute; the peaks are defined as the Tg of the resins.

### Lubricant

The ink preferably contains a lubricant. Inclusion of a lubricant in the ink enhances the abrasion resistance of the ink. A combinational use of a lubricant and a resin enhances the glossiness of images.

There is no specific limit to the lubricant and it can be suitably selected to suit to a particular application; wax is usable.

An example of the wax is polyethylene wax.

Polyethylene wax can be procured.

There is no specific limitation on procurable polyethylene wax and it can be suitably selected to suit to a particular application. Specific examples include, but are not limited to, Aquapetro DP2502C and Aquapetro DP2401 (both manufactured by TOYO ADL CORPORATION). These can be used alone or in combination.

The proportion of the lubricant in the ink is preferably from 0.05 to 2 percent by mass, more preferably from 0.05 to 0.5 percent by mass, and furthermore preferably from 0.05 to 0.45 percent by mass, and particularly preferably from 0.15 to 0.45 percent by mass. A proportion of the lubricant of from 0.05 to 2 percent by mass enhances the abrasion resistance and gloss of images. When the proportion is from 0.05 to 0.45 percent by mass, it is possible to ameliorate the storage stability and the discharging stability of the ink.

The particle diameter of the solid portion in the ink has no particular limit and can be suitably selected to suit to a particular application. For example, the maximum frequency in the maximum number conversion is preferably from 20 to 1,000 nm and more preferably from 20 to 150 nm to ameliorate the discharging stability and image quality such as image density. The solid content includes resin particles and particles of pigment. The particle diameter can be measured by using a particle size analyzer (Nanotrac Wave-UT151, manufactured by MicrotracBEL Corp).

### Water

The proportion of water in the ink is not particularly limited and can be suitably selected to suit to a particular application; it is preferably from 10 to 90 percent by mass and more preferably from 20 to 70 percent by mass to enhance the drying property and discharging reliability of the ink.

There is no specific limitation to the water and it can be suitably selected to suit to a particular application; pure water and ultra pure water such as purified water, deionized water, ultrafiltered water, reverse osmosis water, and distilled water are suitable.

These can be used alone or in combination.

### Additive

The ink may further optionally include additives such as a surfactant, a defoaming agent, a preservative and fungicide, a corrosion inhibitor, and a pH regulator.

### Surfactant

Examples of the surfactant include, but are not limited to, silicone-based surfactants, fluorochemical surfactants, amphoteric surfactants, nonionic surfactants, and anionic surfactants.

The silicone-based surfactant has no specific limit and can be suitably selected to suit to a particular application. Of these, surfactants not decomposable in a high pH environment are preferable. Examples of the silicone-based surfactants include, but are not limited to, side chain modified polydimethyl siloxane, both terminal-modified polydimethyl siloxane, one-terminal-modified polydimethyl siloxane, and side-chain-both-terminal-modified polydimethyl siloxane. In particular, silicone-based surfactants having a polyoxyethylene group or a polyoxyethylene polyoxypropylene group as a modification group are particularly preferable because such an aqueous surfactant demonstrates good properties. It is possible to use a polyether-modified silicone-based surfactant as the silicone-based surfactant. A specific example is a compound in which a polyalkylene oxide structure is introduced into the side chain of the Si site of dimethyl silooxane.

Specific examples of the fluorochemical surfactant include, but are not limited to, perfluoroalkyl sulfonic acid compounds, perfluoroalkyl carboxylic acid compounds, ester compounds of perfluoroalkyl phosphoric acid, adducts of perfluoroalkyl ethylene oxide, and polyoxyalkylene ether polymer compounds having a perfluoroalkyl ether group in its side chain. These are particularly preferable because the fluorochemical surfactant does not readily produce foams.

Specific examples of the perfluoroalkyl sulfonic acid compounds include, but are not limited to, perfluoroalkyl sulfonic acid and salts of perfluoroalkyl sulfonic acid.

Specific examples of the perfluoroalkyl carbonic acid compounds include, but are not limited to, perfluoroalkyl carbonic acid and salts of perfluoroalkyl carbonic acid.

Specific examples of the polyoxyalkylene ether polymer compounds having a perfluoroalkyl ether group in its side chain include, but are not limited to, sulfuric acid ester salts of polyoxyalkylene ether polymer having a perfluoroalkyl ether group in its side chain, and salts of polyoxyalkylene ether polymers having a perfluoroalkyl ether group in its side chain. Counter ions of salts in these fluorochemical surfactants are, for example, Li, Na, K, NH₄, NH₃CH₂CH₂OH, NH₂(CH₂CH₂OH)₂, and NH(CH₂CH₂OH)₃.

Specific examples of the amphoteric surfactants include, but are not limited to, lauryl aminopropionic acid salts, lauryl dimethyl betaine, stearyl dimethyl betaine, and lauryl dihydroxyethyl betaine.

Specific examples of the nonionic surfactants include, but are not limited to, polyoxyethylene alkyl phenyl ethers, polyoxyethylene alkyl esters, polyoxyethylene alkyl amines, polyoxyethylene alkyl amides, polyoxyethylene propylene block polymers, sorbitan aliphatic acid esters, polyoxyethylene sorbitan aliphatic acid esters, and adducts of acetylene alcohol with ethylene oxides.

Specific examples of the anionic surfactants include, but are not limited to, polyoxyethylene alkyl ether acetates, dodecyl benzene sulfonates, laurates, and polyoxyethylene alkyl ether sulfates.

These can be used alone or in combination.

The silicone-based surfactant has no particular limit and can be suitably selected to suit to a particular application.

Specific examples include, but are not limited to, side-chain-modified polydimethyl siloxane, both terminal-modified polydimethyl siloxane, one-terminal-modified polydimethyl siloxane, and side chain both-terminal-modified polydimethyl siloxane. In particular, a polyether-modified silicone-based surfactant having a polyoxyethylene group or a polyoxyethylene polyoxypropylene group is particularly preferable because such a surfactant demonstrates good property as the aqueous surfactant.

Such surfactants can be synthesized or procured. The products are available from BYK-Chemie GmbH, Shin-Etsu Silicone Co., Ltd., Dow Corning Toray Co., Ltd., NIHON EMULSION Co., Ltd., Kyoeisha Chemical Co., Ltd., and others.

The polyether-modified silicon-based surfactant has no particular limit and can be suitably selected to suit to a particular application. For example, a compound is usable in which the polyalkylene oxide structure represented by the following Chemical Formula S-1 is introduced into the side chain of the Si site of dimethyl polysiloxane.

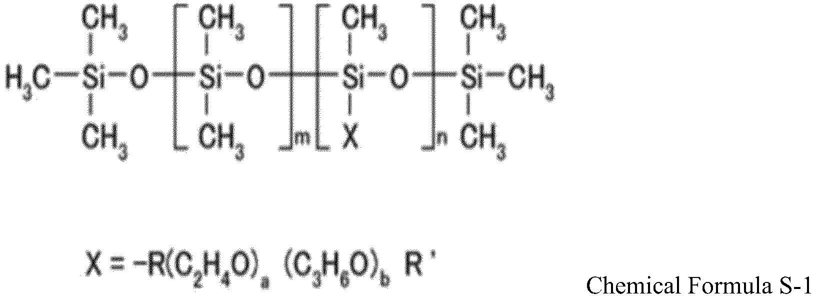

In Chemical Formula S-1, m , n , a , and b each, respectively independently represent integers, R represents an alkylene group, and R represents an alkyl group.

Specific examples of the polyether-modified silicone-based surfactant include, but are not limited to, KF-618, KF-642, and KF-643 (all manufactured by Shin-Etsu Chemical Co., Ltd.), EMALEX-SS-5602 and SS-1906EX (both manufactured by NIHON EMULSION Co., Ltd.), FZ-2105, FZ-2118, FZ-2154, FZ-2161, FZ-2162, FZ-2163, and FZ-2164 (all manufactured by Dow Corning Toray Co., Ltd.), BYK-33 and BYK-387 (both manufactured by BYK Chemie GmbH), and TSF4440, TSF4452, and TSF4453 (all manufactured by Momentive Performance Materials Inc.).

A fluorochemical surfactant in which the number of carbon atoms replaced with fluorine atoms is 2 to 16 is preferable and, 4 to 16, more preferable.

Specific examples of the fluorochemical surfactant include, but are not limited to, perfluoroalkyl phosphoric acid ester compounds, adducts of perfluoroalkyl with ethylene oxide, and polyoxyalkylene ether polymer compounds having a perfluoroalkyl ether group in its side chain. Of these, polyoxyalkylene ether polymer compounds having a perfluoroalkyl ether group in its side chain are preferable because these do not easily foam and the fluorochemical surfactant represented by the following Chemical Formula F-1 or Chemical Formula F-2 is preferable.

CF₃OF₂(CF₂CF₂)ₘ-CH₂CH₂O(CH₂CH₂O)ₙH Chemical Formula F-1

In Chemical Formula F-1, m is preferably 0 or an integer of from 1 to 10 and n is preferably 0 or an integer of from 1 to 40.

CₙF₂ₙ₊₁-CH₂CH(OH)CH₂-O-(CH₂CH₂O)ₐ-Y Chemical Formula F-2

In the compound represented by the Chemical Formula F-2, Y represents H or CₘF₂ₘ₊₁, where n represents an integer of from 1 to 6, or CH₂CH(OH)CH₂-CₘF₂ₘ₊₁, where m represents an integer of from 4 to 6, or CₚH₂ₚ₊₁, where p is an integer of from 1 to 19. n represents an integer of from 1 to 6. a represents an integer of from 4 to 14.

The fluorochemical surfactant is commercially available. Specific examples include, but are not limited to, SURFLON S-111, S-112, S-113, S-121, S-131, S-132, S-141, and S-145 (all manufactured by ASAHI GLASS CO., LTD.); FLUORAD FC-93, FC-95, FC-98, FC-129, FC-135, FC-170C, FC-430, and FC-431 (all manufactured by Sumitomo 3M Limited); MEGAFACE F-470, F-1405, and F-474 (all manufactured by DIC CORPORATION); ZONYL TBS, FSP, FSA, FSN-100, FSN, FSO-100, FSO, FS-300, UR, and Capstone^{™} FS-30, FS-31, FS-3100, FS-34, and FS-35 (all manufactured by The Chemours Company); FT-110, FT-250, FT-251, FT-400S, FT-150, and FT-400SW (all manufactured by NEOS COMPANY LIMITED); POLYFOX PF-136A, PF-156A, PF-151N, PF-154, and PF-159 (manufactured by OMNOVA SOLUTIONS INC.); and UNIDYNE^{™} DSN-403N (manufactured by DAIKIN INDUSTRIES, Ltd.). Of these, in terms of improvement on print quality, in particular coloring property and permeability, wettability, and uniform dying property on paper, FS-3100, FS-34, and FS-300 of The Chemours Company, FT-110, FT-250, FT-251, FT-400S, FT-150, and FT-400SW ofNEOS COMPANY LIMITED, POLYFOX PF-151N of OMNOVA SOLUTIONS INC., and UNIDYNE^{™} DSN-403N (manufactured by DAIKIN INDUSTRIES, Ltd.) are particularly preferable.

The proportion of the surfactant in the ink is not particularly limited and can be suitably selected to suit to a particular application. For example, the proportion is preferably from 0.001 to 5 percent by mass and more preferably from 0.05 to 5 percent by mass to achieve excellent wettability and discharging stability and improve image quality.

### Defoaming Agent

The defoaming agent has no particular limit. Examples include, but are not limited to silicon-based defoaming agents, polyether-based defoaming agents, and aliphatic acid ester-based defoaming agents. These can be used alone or in combination. Of these, silicone-based defoaming agents are preferable to achieve the effect of foam breaking.

### Preservatives and Fungicides

The preservatives and fungicides are not particularly limited. A specific example is 1,2-benzisothiazoline-3-one.

### Corrosion Inhibitor

The corrosion inhibitor has no particular limitation. Examples include, but are not limited to, acid sulfites and sodium thiosulfates.

### pH Regulator

The pH regulator has no particular limit as long as it can control pH to 7 or greater. Specific examples include, but are not limited to, amines such as diethanol amine and triethanol amine.

### Total of Solid Content

The total of the solid content of the materials including the resins, lubricants, and pigments contained in the ink is preferably from 7.0 to 14.0 percent by mass. A proportion of 7.0 percent by mass or greater enhances the abrasion resistance. A proportion of 14.0 percent by mass or less enhances the discharging stability and storage stability of the ink.

### Property of Ink

Properties of the ink are not particularly limited and can be suitably selected to suit to a particular application; viscosity, surface tension, and pH are preferable in the following ranges.

The ink preferably has a viscosity of from 5 to 30 mPa s and more preferably from 5 to 25 mPa s at 25 degrees C to enhance the print density and text quality and achieve a good dischargeability. Viscosity can be measured by equipment such as a rotatory viscometer (RE-80L, manufactured by TOKI SANGYO CO., LTD.). The measuring conditions are as follows:
Standard cone rotor (1 34 R24)
Sample liquid amount: 1.2 mL
Rate of rotation: 50 rotations per minute (rpm)
25 degrees C
Measuring time: three minutes.

The surface tension of the ink is preferably 35 mN/m or less and more preferably 32 mN/m or less at 25 degrees C because the ink suitably levels on a recording medium and the ink dries in a shorter time.

pH of the ink is preferably from 7 to 12 and more preferably from 8 to 11 to prevent corrosion of metal material in contact with liquid.

### Recording Medium

The recording medium for use in printing is not particularly limited.

Specific examples include, but are not limited to, plain paper, gloss paper, special paper, cloth, film, transparent sheets, and printing paper for general purposes.

Application of Image Forming device, Device with Which Image Forming Device Is Equipped, and Process Included in Image Forming Method

In the present disclosure, the image forming device and the image forming method respectively represent a device capable of discharging ink and processing fluids to a recording media and printing utilizing the device. The recording medium means an item to which ink or various processing fluids can be temporarily or permanently attached.

The image forming device may further optionally include a device relating to feeding, conveying, and ejecting a recording medium and other devices referred to as a pre-processing device, a post-processing device in addition to the head portion to discharge the ink.

The image forming device and the image forming method may further optionally include a heating device (drying device) for use in the heating process (drying process). For example, the heating device heats the print surface and/or the opposite surface of a recording medium.

In addition, the image forming device and the image forming method are not limited to those for producing meaningful visible images such as texts and figures with ink. They include the device and the method capable of producing patterns like geometric design and 3D images.

Furthermore, in addition to the desktop type, this image forming device includes a device capable of printing images on a wide recording medium having, for example, A0 size and a continuous printer capable of using continuous paper rolled up in a roll-like form as a recording medium.

The terms of image forming, recording, and printing in the present disclosure represent the same meaning.

Also, recording media, media, and print substrates in the present disclosure have the same meaning unless otherwise specified.

Each process in the image forming method of the present disclosure can be executed by each corresponding device described below.

### Ink Discharging Device

One of the ink applying devices includes a liquid discharging head (also referred to as head or discharging head) having a plurality of nozzle lines for discharging liquid. The liquid discharging head can be any known inkjet head. The ink applying device includes a black ink applying device and a color ink applying device. The number of devices and dispositions thereof can be suitably changed to a particular application.

The ink applying device includes a serial type device in which the liquid discharging head is caused to move and a line type device in which the liquid discharging head is not caused to move.

### Heating Device

The heating device is also referred to as a drying device and includes a non-contact type heating device and a contact type heating device.

In the present embodiment, the non-contact type heating device includes an irradiator emitting visible light or ultraviolet radiation having a wavelength of 700 nm or less to a recording medium. The irradiator includes an ultraviolet radiation irradiator or visible light lamp.

Specific examples include, but are not limited to, UV-LED and LED. The wavelength mentioned above means the wavelength at peak.

The irradiator exposes a recording medium with visible light or ultraviolet after the black ink applying device and/or a color ink applying device applies ink to the recording medium.

As described above, the following relationship is satisfied in the present embodiment: TG_{A} < Tᵢ <TG_{B}, where Tᵢ or T_{image} represents the surface temperature of the image on a recording medium after the recording medium is exposed to the visible light or ultraviolet radiation.

When the relationship is satisfied, it is possible to avoid unnecessary heating to carbon black or prevent waving of a recording medium caused by evaporation of moisture in the recording medium.

The relationship is kept by suitably selecting the types of the resin A and the resin B. It can be satisfied by changing the heating time such as exposure time, the feeding speed of a recording medium, the wavelength and/or strength of irradiation of visible light or ultraviolet radiation, or heating time and/or heating temperature of a heating device other than the irradiator.

The temperature Tᵢ is preferably above 50 degrees C and below 80 degrees C. The drying property is enhanced when Ti is higher than 50 degrees C. The image density is enhanced when Ti is lower than 50 degrees C.

One way of measuring the surface temperature Tᵢ of an image is to dispose a non-contact type infrared temperature sensor around downstream of the irradiator, i.e., downstream of the irradiator and around the position where the irradiation ends, which may be referred to as the drying outlet.

The contact-type heating device is not particularly limited; it includes a heated roller or drum. Recording media is heated by winding around such a roller or drum. It is possible to heat recording media by a contact type heating device before, during, and after printing.

The surface temperature of a heater such as a roller or drum is preferably the surface temperature Tᵢ of an image or lower. Such a heater can minimize waving of recording media owing to the evaporation of moisture.

The heating time after ink is applied can be suitably changed; it is preferably 0.5 seconds or more and more preferably from 0.5 to 2 seconds.

Since it is possible to control the image gloss by the surface roughness changing as the film of resin is formed by drying, the solvent in the image sufficiently dries when the heating time is 0.5 seconds or more, thereby enhancing the abrasion resistance.

### First Embodiment of Image Forming Device

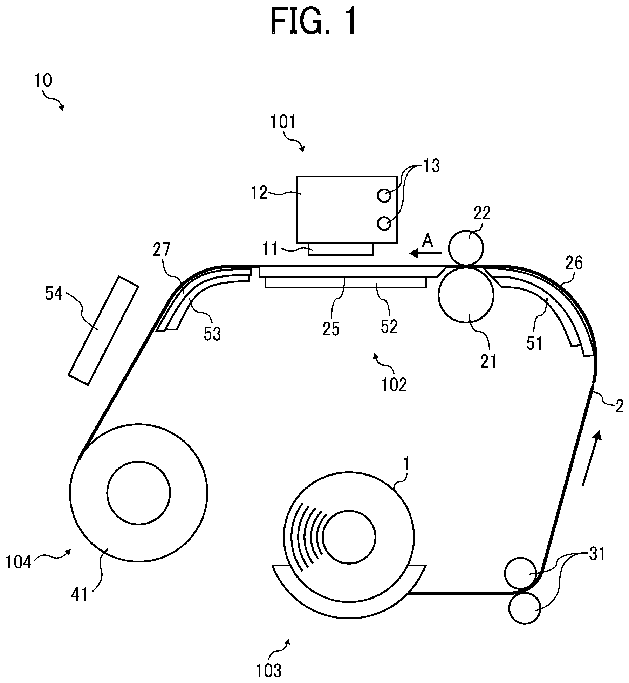

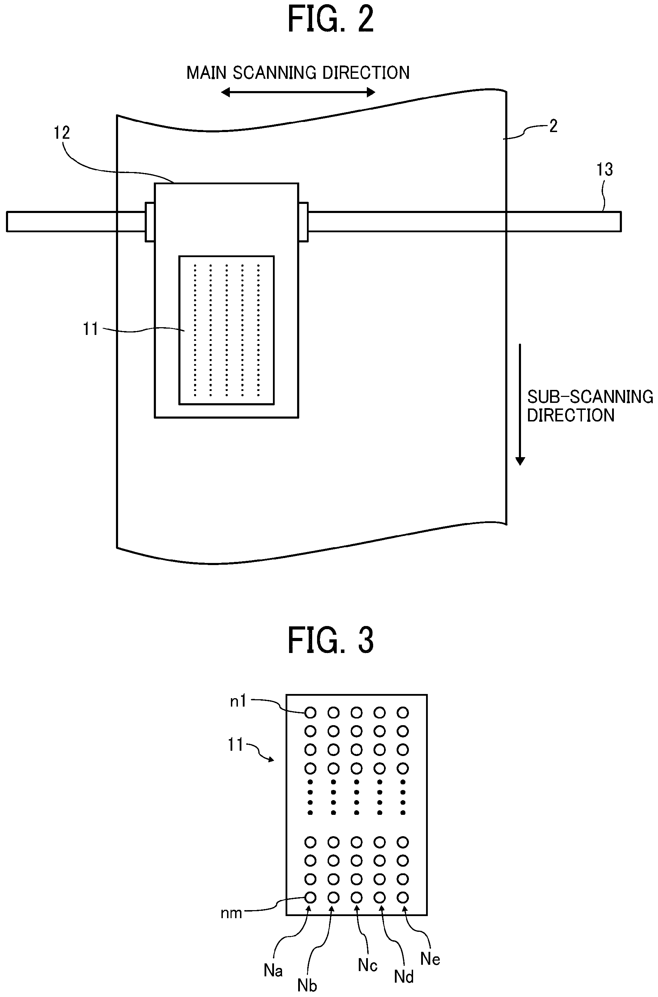

The image forming device of an embodiment of the present disclosure is described with reference to FIGS. 1 to 3. FIG. 1 is a diagram illustrating a side view of an image forming device 10, FIG. 2 is a diagram illustrating a planar view of the image forming device, and FIG. 3 is a diagram illustrating a planar view of the head.

The image forming device is a serial type inkjet recording device including a printing unit (image forming unit) 101 for printing on a recording medium (medium) 2 as printing substrate, a feeding unit 102 for feeding the medium 2, a roll accommodating unit 103 accommodating the medium 2, a roll reeling unit 104 for reeling the medium 2.

This device uses a roll 1 reeling up the medium 2 in a roll form. The roll accommodating unit 103 accommodates the roll 1 and draws out and feeds the medium 2 from the roll 1 with a pair of feeding rollers 31.

The printing unit 101 serving as a black ink applying device and a color ink applying device includes a liquid discharging head (hereinafter also referred to as head) 11 having multiple nozzle lines for discharging liquid and carriage 12 carrying the liquid discharging head 11 as illustrated in FIG. 2. Guiding members 13 holds the carriage 12 in a reciprocatable manner in the main scanning direction (perpendicular to the surface of FIG. 1).

The head 11 has multiple nozzles Na to Ne in which multiple nozzles n1 to nm (wherein the number of nozzles is m) for discharging liquid are aligned as illustrated in FIG. 3. The carriage 12 carries the head 11 with the nozzle alignment direction as the medium conveying direction (sub-scanning direction).

The nozzle lines Na to Nc of the head 11 includes, for example, coloring material ink nozzle lines for discharging coloring material ink such as black (K), yellow (Y), magenta (M), and cyan (C). The nozzle line Nd of the head 11 includes, for example, a transparent ink nozzle line for discharging transparent ink. The nozzle line Ne of the head 11 includes, for example, a pre-processing fluid nozzle line for discharging pre-processing fluid. In this embodiment, a single head has five nozzle lines Na to Ne. It is possible to configure multiple heads having multiple nozzles.

The feeding unit 102 includes a conveying roller 21 and an opposing roller 22 upstream of the printing unit 101 in the medium conveying direction indicated by the arrow A (sub-scanning direction) conveying the medium 2 pinched therebetween. A platen 25 is disposed for guiding the medium 2 with the medium 2 between the platen 25 and the printing unit 101.

The roll reeling unit 104 has a reeling roller 41 for reeling up the medium 2.

Three heaters of a pre-heater 51, a print heater 52, and a post heater 53 are disposed along the conveying direction of the medium 2.

The pre-heater 51 heats the medium 2 before the printing region of the printing unit 101. The print-heater 52 heats the medium 2 at the printing region of the printing unit 101. The post-heater 53 heats the medium 2 after the printing region of the printing unit 101. For the pre-heater 51, the print heater 52, and the post heater 53, conduction heating heaters using ceramic or nichrome wire can be used. The reference numerals 26 and 27 respectively represent a conveyance guide on the upstream side and a conveyance guide on the downstream side.

An irradiator 54 for emitting energy lines such as ultraviolet radiation or visible light to the medium 2 is disposed downstream of the post heater 53. The irradiator 54 exposes the printing surface with the energy lines so that the pigment in ink produces heat and dries.

### Second Embodiment of Image Forming Device

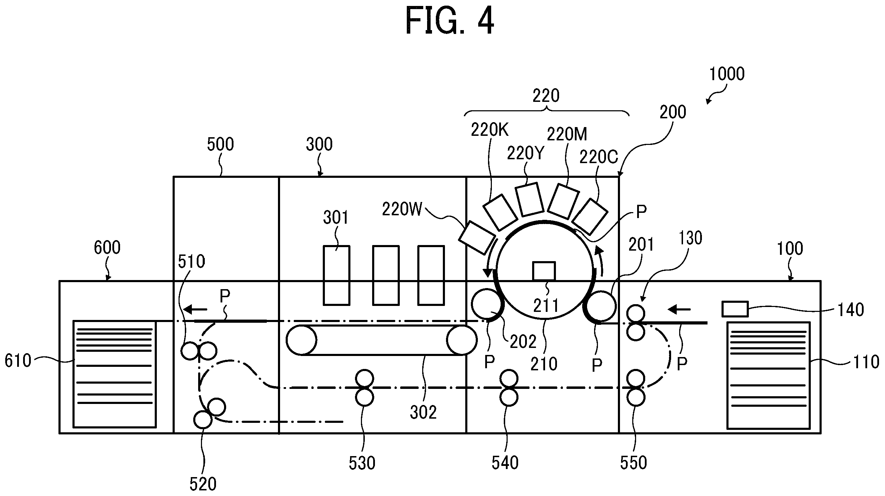

The image forming device of another embodiment of the present disclosure is described with reference to FIG. 4. FIG. 4 is a diagram illustrating the configuration of the image forming device.

The printing device 1000 of the present embodiment includes a feeding unit 100, an image forming unit 200, a drying unit 300, a reversing unit 500 for duplex printing, and an ejection unit 600.

A feeding device 140 feeds paper P from a feeding tray 110 of the feeding unit 100. The paper P temporarily stops at a pair of registration rollers 130 and is fed to the image forming unit 200 at a particular timing.

The paper P is fed to a paper bearing drum 210 via a receiving drum 201 and the image forming unit 200 forms images on the paper P with an inkjet head 220 at the paper bearing drum 210. Which color of the inkjet head 220 is used for image forming is determined according to the printing mode selected by an operator. The operator can select one printing mode from the printing modes such as monochrome mode, full color mode, and a full color + white mode in accordance with the printing image.

When the monochrome mode is selected, the inkjet head 220K alone is used for image formation; the inkjet heads 220C, 220M, 220Y, and 220W are protected with caps even during printing.. When the full color mode is selected, the inkjet heads 220K, 220C, 220M, and 220Y are used for image formation; the inkjet head 220W is protected with a cap even during printing. When the full color + white mode is selected, the inkjet heads 220K, 220C, 220M, 220Y, and 220 W are used for image formation.

Thereafter, the paper P is conveyed to the drying device 300 via a feeding drum 202.

In the drying unit 300, the paper P is conveyed on a drying conveyance belt 302 and a UV irradiator 301 exposes the paper with UV radiation to dry the printing image.

The paper P passes through the reversing unit 500 in a simplex mode and ejected to an ejection tray 610 of the ejection unit 600. The paper P is conveyed to a reversing roller 520 by a separation claw via a conveyance roller 510. The paper P is suspended and switched back to the reverse direction. The paper P meets the pair of registration rollers 130 of the feeding unit 100 again via conveyance rollers 530, 540, and 550 of both side pass; image formation initiates on the rear side of the paper P.

Having generally described preferred embodiments of this disclosure, further understanding can be obtained by reference to certain specific examples which are provided herein for the purpose of illustration only and are not intended to be limiting. In the descriptions in the following examples, the numbers represent weight ratios in parts, unless otherwise specified.

### EXAMPLES

Next, embodiments of the present disclosure are described in detail with reference to Examples but are not limited thereto.

### Examples 1 to 12 and Comparative Examples 1 to 6

### Preparation of Black Pigment Dispersion

A total of 20 g of carbon black (FW100, manufactured by Degussa AG), 20 mmol of the compound represented by Chemical Formula 1 below, and 200 mL of deionized water were mixed by a mixer (6,000 rpm, manufactured by Silverson Machines) at room temperature (25 degrees C) to obtain a slurry. When the obtained slurry had a pH higher than 4, 20 mmol of nitric acid was added. Thirty minutes later, 20 mmol of sodium nitrite dissolved in a small quantity of deionized highly pure water was slowly added to the obtained mixture. Furthermore, the temperature was raised to 60 degrees C while the mixture was stirred to allow reaction for one hour. A reformed pigment was produced in which the compound represented by Chemical Formula 1 illustrated below was added to carbon black. Thereafter, NaOH aqueous solution was added to the product to adjust pH to 10; a reformed pigment dispersion was obtained 30 minutes later. The reformed pigment dispersion containing a pigment bonded with at least one geminalbis phosphonic acid group or a sodium salt of geminalbis phosphonic acid and deionized highly pure water were subjected to ultrafiltering using dialysis membrane followed by ultrasonic dispersion to obtain a black pigment dispersion having a pigment solid portion of 15 percent by mass.

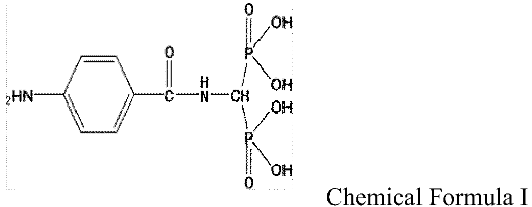

### Preparation of Styrene Acrylic Resin Emulsion

A total of 900 g of deionized water and 1 g of sodium lauryl sulfate were charged in a reaction container equipped with a stirrer, a reflux condenser, a dripping device, and a thermometer and heated to 70 degrees C while replacing nitrogen during stirring. While maintaining the internal temperature at 70 degrees C, 4 g of potassium persulfate was added as polymerization initiator to obtain a reaction solution. A total amount of 1,000 g of the compounds corresponding to the monomers shown in Table was added according to the proportion shown in Table to 450 g of deionized water and 3 g of sodium lauryl sulfate during stirring to preliminarily prepare an emulsion, which was continuously dripped to the reaction solution in four hours. After dripping, the resulting solution was aged for three hours. After the thus-obtained aqueous emulsion was cooled down to room temperature, deionized water and sodium hydroxide aqueous solution were added to adjust pH of the solution to 8 to obtain a styrene acrylic resin emulsion 1 (solid portion of 30 percent by mass).

Styrene acrylic resin emulsions 2 to 7 were obtained in the same manner as styrene acrylic resin emulsion 1 except that the prescription was changed to the prescriptions (mass ratio of monomers) shown in Table 1.

**Table 1**

| | | Styrene acrylic resin emulsion 1 | Styrene acrylic resin emulsion 2 | Styrene acrylic resin emulsion 3 | Styrene acrylic resin emulsion 4 |
|---|---|---|---|---|---|
| Monomer | Styrene (percent by mass) | 69 | 70 | 65 | 55 |
| | Methyl methacrylate (percent by mass) | 24 | 25 | 25 | 20 |
| | Acrylic acid-2-ethylhexyl (percent by mass) | 2 | 5 | 10 | 25 |
| Resin Tg (degrees C) | | 160 | 120 | 90 | 60 |

| | | Styrene acrylic resin emulsion 5 | Styrene acrylic resin emulsion 6 | Styrene acrylic resin emulsion 7 | |
|---|---|---|---|---|---|
| Monomer | Styrene (percent by mass) | 40 | 25 | 15 | |
| | Methyl methacrylate (percent by mass) | 15 | 10 | 5 | |
| | Acrylic acid-2-ethylhexyl (percent by mass) | 45 | 65 | 80 | |
| Resin Tg (degrees C) | | 45 | 30 | 0 | |

### Preparation of Polyurethane Resin Emulsion

A total of 500 g of amorphous polycarbonate diol (DURANOL^{™} T5651, manufactured by Asahi Kasei Chemicals Corporation) having a number average molecular weight (Mn) of 500, 45.8 g of dimethylol propionate, 358 g of isophorone diisocyanate (IPDI), 29.4 g of triethylamine, and 650 g of acetone were placed in an autoclave reactor equipped with a stirrer and a jacket while introducing nitrogen. Thereafter, the system was heated to 80 degrees C to achieve urethanification reaction in 5 hours to manufacture a prepolymer.

The system was back to and maintained at 40 degrees C. The percent of NCO present in the system was confirmed and water was added thereto. After heating and stirring for 30 minutes, an elongation agent (isophoronediamine (IPDA)) was added followed by heating and stirring for three to six hours. The system was purged of the organic solvent to obtain polyurethane resin emulsion having a solid content concentration of 31 percent by mass.

The polyurethane resin in the thus-obtained polyurethane resin emulsion had a volume average particle diameter of 106 nm and a glass transition temperature of -22.02 degrees C.

### Preparation Example of Ink

Each of the components was mixed and stirred according to the prescription shown in Tables 2 and 3 followed by filtering with a polypropylene filter (Profile Star, average particle diameter of 1.5 µm, manufactured by NIHON PALL LTD.) to prepare each ink shown in Tables 2 and 3. The silicone surfactant was polyether-modified siloxane copolymer, TEGO WET 270, manufactured by Evonik Industries AG

The trade names and the manufacturing companies of the ingredients shown in Tables are as follows:
3-methoxy-3-ethyl-1-propanol, manufactured by Tokyo Chemical Industry Co. Ltd.
3-methyl-1,3-butane diol, manufactured by Tokyo Chemical Industry Co. Ltd.
1,3-butane diol, manufactured by Tokyo Chemical Industry Co. Ltd.
2-propyl-1,3-pentane diol, manufactured by Tokyo Chemical Industry Co. Ltd.

The amount of moisture in Table means the value obtained by subtracting the solid contents of coloring material and resin, the content of surfactant, and the total amount of the organic solvent from the total amount of ink.

### Evaluation and Measuring

### Image Forming

A cut sheet (Lumi Art Gloss, weight of 130 g/m², width of 521 mm, manufactured by Stora Enso AB) as recording medium was set in the image forming device illustrated in FIG. 4. A black image was printed with a printing resolution of 1,200 dpi.

The UV-LED lamp (Semray UV 4003, manufactured by Heraeus K.K.) as an irradiator exposed the recording medium to the light under the conditions shown in Table below.

An infrared irradiator (IR) was used in Example 5 and a heated wind device was used in Comparative Example 6.

The temperature and the time was adjusted for image forming by adjusting the strength of irradiation of the irradiator and the conveying speed of the recording medium. The surface temperature Tᵢ of image was measured with a non-contact type infrared temperature sensor disposed downstream (exit of drying) of the irradiator, the infra red irradiator, or the heated wind device by measuring the surface temperature of the image immediately after drying.

The surface temperatures of the pre-heater, print heater, and the post heater were set to be the surface temperature Tᵢ of image or below.

### Image Density

The density of the image formed on the recording medium with an amount of ink attached of 0.9 µL/cm² was measured with an image densitometer (X-Rite eXact, manufactured by X-Rite Inc.). The image density was evaluated according to the following criteria. The grades S, A, and B are allowable.

### Evaluation Criteria

S: Image density of 2.5 or greater
A: Image density of from 2.3 to less than 2.5
B: Image density of from 2.0 to less than 2.3
C: Image density of less than 2.0

### Drying Property

The image formed on the recording medium was abraded with a clock meter three minutes after printing. The abraded image was visually checked to determine whether the image was scraped. The image was free of scraping at a particular level of the drying energy or greater. The drying energy required to be free of scraping was measured. The drying energy was calculated by the product of the amount of irradiation and the irradiation time of the irradiator. The drying property was evaluated according to the following criteria. The grades S, A, and B are allowable.

### Evaluation Criteria

S: Required drying energy is less than 1,500 mJ/cm²
A: Required drying energy is from 1,500 to less than 2,000 mJ/cm²
B: Required drying energy is from 2.000 to less than 2,500 mJ/cm²
C: Required drying energy is 2,500 mJ/cm² or greater

### Waving of Paper

The recording medium (printed matter) on which an image was formed was visually checked for evaluation. The waving was evaluated according to the following criteria. The grades S, A, and B are allowable.

### Evaluation Criteria

S: Free of curling or waving of printed matter
A: Free of curling and waving slightly present
B: Wrinkles present waving over printed matter and curling present at end portions
C: Printed matter curls and wrinkles present waving over printed matter

The results are shown in Table below. The Drying method in Table is related to the irradiator, infra red irradiator, and heated wind device.

**Table 2**

| | | Example 1 | Example 2 | Example 3 | Example 4 |
|---|---|---|---|---|---|
| Coloring material | Black pigment liquid dispersion (Pigment solids concentration: 15 percent by mass) | 40.0 | 40.0 | 33.3 | 40.0 |
| Organic solvent | 3-Methoxy-3-ethyl-1-propanol | | | | 2.0 |
| | 3-Methyl-1,3-butane diol | 5.0 | 5.0 | 5.0 | 2.0 |
| | 1,3-Butane diol | 15.0 | 15.0 | 15.0 | 16.0 |
| | 2-Propyl-1,3-pentane diol | 2.0 | 2.0 | 2.0 | 0.0 |
| Resin | Styrene acrylic resin emulsion 1 (solid content of 30 percent by mass, Tg of 160 degrees C) | | | | |
| | Styrene acrylic resin emulsion 2 (solid content of 30 percent by mass, Tg of 120 degrees C) | | | | |
| | Styrene acrylic resin emulsion 3 (solid content of 30 percent by mass, Tg of 90 degrees C) | 10.0 | 6.7 | 13.3 | 10.0 |
| | Styrene acrylic resin emulsion 4 (solid content of 30 percent by mass, Tg of 60 degrees C) | | | | |
| | Styrene acrylic resin emulsion 5 (solid content of 30 percent by mass, Tg of 45 degrees C) | 3.3 | 6.7 | 3.3 | 3.3 |
| | Styrene acrylic resin emulsion 6 (solid content of 30 percent by mass, Tg of 30 degrees C) | | | | |
| | Styrene acrylic resin emulsion 7 (solid content of 30 percent by mass, Tg of 0 degrees C) | | | | |
| | Urethane resin emulsion (solid content of 31 percent by mass, Tg of -22.02 degrees C) | | | | |
| Surfactant | Silicone surfactant | 1.0 | 1.0 | 1.0 | 1.0 |
| Water | Deionized water | 23.7 | 23.7 | 27.0 | 25.7 |
| Total (Percent by mass) | | 100 | 100 | 100 | 100 |
| Amount of moisture (percent by mass) | | 67.0 | 67.0 | 67.0 | 69.0 |
| Drying method | Drying method | UV-LED | UV-LED | UV-LED | UV-LED |
| | Wavelength (nm) | 395 | 395 | 395 | 395 |
| Surface temperature Tᵢ of image | | 70 | 70 | 70 | 70 |
| Image Density | Image Density | 2.6 | 2.5 | 2.5 | 2.6 |
| | Interpretation | S | S | S | S |
| Drying property | Drying energy (mJ/cm²) | 1300 | 1200 | 1400 | 1400 |
| | Interpretation | S | S | S | S |
| Waving of paper | Interpretation | S | S | S | S |

| | | Example 5 | Example 6 | Example 7 | Example 8 |
|---|---|---|---|---|---|
| Coloring material | Black pigment liquid dispersion (Pigment solids concentration: 15 percent by mass) | 40.0 | 40.0 | 40.0 | 40.0 |
| Organic solvent | 3-Methoxy-3-ethyl-1-propanol | | | | |
| | 3-Methyl-1,3-butane diol | 5.0 | 5.0 | 5.0 | 5.0 |
| | 1,3-Butane diol | 15.0 | 15.0 | 15.0 | 15.0 |
| | 2-Propyl-1,3-pentane diol | 2.0 | 2.0 | 2.0 | 2.0 |
| Resin | Styrene acrylic resin emulsion 1 (solid content of 30 percent by mass, Tg of 160 degrees C) | | | | |
| | Styrene acrylic resin emulsion 2 (solid content of 30 percent by mass, Tg of 120 degrees C) | | | | 10.0 |
| | Styrene acrylic resin emulsion 3 (solid content of 30 percent by mass, Tg of 90 degrees C) | 10.0 | 10.0 | 10.0 | |
| | Styrene acrylic resin emulsion 4 (solid content of 30 percent by mass, Tg of 60 degrees C) | | | 3.3 | |
| | Styrene acrylic resin emulsion 5 (solid content of 30 percent by mass, Tg of 45 degrees C) | | | | 3.3 |
| | Styrene acrylic resin emulsion 6 (solid content of 30 percent by mass, Tg of 30 degrees C) | 3.3 | | | |
| | Styrene acrylic resin emulsion 7 (solid content of 30 percent by mass, Tg of 0 degrees C) | | 3.3 | | |
| | Urethane resin emulsion (solid content of 31 percent by mass, Tg of -22.02 degrees C) | | | | |
| Surfactant | Silicone surfactant | 1.0 | 1.0 | 1.0 | 1.0 |
| Water | Deionized water | 23.7 | 23.7 | 23.7 | 23.7 |
| Total (Percent by mass) | | 100 | 100 | 100 | 100 |
| Amount of moisture (percent by mass) | | 67.0 | 67.0 | 67.0 | 67.0 |
| Drying method | Drying method | UV-LED | UV-LED | UV-LED | UV-LED |
| | Wavelength (nm) | 395 | 395 | 395 | 395 |
| Surface temperature Tᵢ of image | | 70 | 70 | 70 | 70 |
| Image Density | Image Density | 2.5 | 2.4 | 2.6 | 2.6 |
| | Interpretation | S | A | S | S |
| Drying property | Drying energy (mJ/cm²) | 1300 | 1200 | 1900 | 1400 |
| | Interpretation | S | S | A | S |
| Waving of paper | Interpretation | S | S | S | S |

| | | Example 9 | Example 10 | Example 11 | Example 12 |
|---|---|---|---|---|---|
| Coloring material | Black pigment liquid dispersion (Pigment solids concentration: 15 percent by mass) | 40.0 | 40.0 | 40.0 | 40.0 |
| Organic solvent | 3-Methoxy-3-ethyl-1-propanol | | | | |
| | 3-Methyl-1,3-butane diol | 5.0 | 5.0 | 5.0 | 5.0 |
| | 1,3-Butane diol | 15.0 | 15.0 | 15.0 | 15.0 |
| | 2-Propyl-1,3-pentane diol | 2.0 | 2.0 | 2.0 | 2.0 |
| Resin | Styrene acrylic resin emulsion 1 (solid content of 30 percent by mass, Tg of 160 degrees C) | 10.0 | | | |
| | Styrene acrylic resin emulsion 2 (solid content of 30 percent by mass, Tg of 120 degrees C) | | | | |
| | Styrene acrylic resin emulsion 3 (solid content of 30 percent by mass, Tg of 90 degrees C) | | 10.0 | 10.0 | 10.0 |
| | Styrene acrylic resin emulsion 4 (solid content of 30 percent by mass, Tg of 60 degrees C) | | | | |
| | Styrene acrylic resin emulsion 5 (solid content of 30 percent by mass, Tg of 45 degrees C) | 3.3 | | 3.3 | 3.3 |
| | Styrene acrylic resin emulsion 6 (solid content of 30 percent by mass, Tg of 30 degrees C) | | | | |
| | Styrene acrylic resin emulsion 7 (solid content of 30 percent by mass, Tg of 0 degrees C) | | | | |
| | Urethane resin emulsion (solid content of 31 percent by mass, Tg of -22.02 degrees C) | | 3.3 | | |
| Surfactant | Silicone surfactant | 1.0 | 1.0 | 1.0 | 1.0 |
| Water | Deionized water | 23.7 | 23.7 | 23.7 | 23.7 |
| Total (Percent by mass) | | 100 | 100 | 100.0 | 100.0 |
| Amount of moisture (percent by mass) | | 67.0 | 67.0 | 67 | 67 |
| Drying method | Drying method | UV-LED | UV-LED | UV-LED | UV-LED |
| | Wavelength (nm) | 395 | 395 | 395 | 395 |
| Surface temperature Tᵢ of image | | 70 | 70 | 80 | 50 |
| Image Density | Image Density | 2.7 | 2.6 | 2.1 | 2.6 |
| | Interpretation | S | S | B | S |
| Drying property | Drying energy (mJ/cm²) | 1700 | 2400 | 1200 | 2300 |
| | Interpretation | A | B | S | B |
| Waving of paper | Interpretation | S | S | S | S |

**Table 3**

| | | Comparative Example 1 | Comparative Example 2 | Comparative Example 3 |
|---|---|---|---|---|
| Coloring material | Black pigment dispersion (Pigment solids content: 15 percent by mass) | 40.0 | 40.0 | 40.0 |
| Organic solvent | 3-Methoxy-3-ethyll-propanol | | | |
| | 3-Methyl-1,3-butane diol | 5.0 | 5.0 | 5.0 |
| | 1,3-Butane diol | 15.0 | 15.0 | 15.0 |
| | 2-Propyl-1,3-pentane diol | 2.0 | 2.0 | 2.0 |
| Resin | Styrene acrylic resin emulsion 1 (solid content of30 percent by mass, Tg of 160 degrees C) | | | |
| | Styrene acrylic resin emulsion 2 (solid content of30 percent by mass, Tg of 120 degrees C) | | | |
| | Styrene acrylic resin emulsion 3 (solid content of 30 percent by mass, Tg of 90 degrees C) | 13.3 | | 10.0 |
| | Styrene acrylic resin emulsion 4 (solid content of30 percent by mass, Tg of 60 degrees C) | | | |
| | Styrene acrylic resin emulsion 5 (solid content of 30 percent by mass, Tg of 45 degrees C) | | 13.3 | 3.3 |
| | Styrene acrylic resin emulsion 6 (solid content of 30 percent by mass, Tg of30 degrees C) | | | |
| | Styrene acrylic resin emulsion 7 (solid content of 30 percent by mass, Tg of 0 degrees C) | | | |
| | Urethane resin emulsion (solid content of 31 percent by mass, Tg of -22.02 degrees C) | | | |
| Surfactant | Silicone surfactant | 1.0 | 1.0 | 1.0 |
| Water | Deionized water | 23.7 | 23.7 | 23.7 |
| Total (Percent by mass) | | 100 | 100 | 100 |
| Amount of moisture (percent by mass) | | 67.0 | 67.0 | 67.0 |
| Drying method | Drying method | UV-LED | UV-LED | UV-LED |
| | Wavelength (nm) | 395 | 395 | 395 |
| Surface temperature Tᵢ of image | | 70 | 70 | 40 |
| Image Density | Image Density | 2.7 | 1.8 | 2.7 |
| | Interpretation | S | C | S |
| Drying property | Drying energy (mJ/cm²) | 2700 | 1300 | 3000 |
| | Interpretation | C | S | C |
| Waving of paper | Interpretation | S | S | S |

| | | Comparative Example 4 | Comparative Example 5 | Comparative Example 6 |
|---|---|---|---|---|
| Coloring material | Black pigment dispersion (Pigment solids content: 15 percent by mass) | 40.0 | 40.0 | 40.0 |
| Organic solvent | 3-Methoxy-3-ethyll-propanol | | | |
| | 3-Methyl-1,3-butane diol | 5.0 | 5.0 | 5.0 |
| | 1,3-Butane diol | 15.0 | 15.0 | 15.0 |
| | 2-Propyl-1,3-pentane diol | 2.0 | 2.0 | 2.0 |
| Resin | Styrene acrylic resin emulsion 1 (solid content of30 percent by mass, Tg of 160 degrees C) | | | |
| | Styrene acrylic resin emulsion 2 (solid content of30 percent by mass, Tg of 120 degrees C) | | | |
| | Styrene acrylic resin emulsion 3 (solid content of 30 percent by mass, Tg of 90 degrees C) | 10.0 | 10.0 | 10.0 |
| | Styrene acrylic resin emulsion 4 (solid content of 30 percent by mass, Tg of 60 degrees C) | | | |
| | Styrene acrylic resin emulsion 5 (solid content of 30 percent by mass, Tg of 45 degrees C) | 3.3 | 3.3 | 3.3 |
| | Styrene acrylic resin emulsion 6 (solid content of 30 percent by mass, Tg of30 degrees C) | | | |
| | Styrene acrylic resin emulsion 7 (solid content of 30 percent by mass, Tg of 0 degrees C) | | | |
| | Urethane resin emulsion (solid content of 31 percent by mass, Tg of -22.02 degrees C) | | | |
| Surfactant | Silicone surfactant | 1.0 | 1.0 | 1.0 |
| Water | Deionized water | 23.7 | 23.7 | 23.7 |
| Total (Percent by mass) | | 100 | 100 | 100 |
| Amount of moisture (percent by mass) | | 67.0 | 67.0 | 67.0 |
| Drying method | Drying method | UV-LED | IR | Heated wind |
| | Wavelength (nm) | 395 | 1500 | - |
| Surface temperature Tᵢ of image | | 100 | 70 | 70 |
| Image Density | Image Density | 1.9 | 2.4 | 2.3 |
| | Interpretation | C | A | A |
| Drying property | Drying energy (mJ/cm²) | 2700 | 1600 | - |
| | Interpretation | C | A | - |
| Waving of paper | Interpretation | A | C | C |

As seen in the results shown in Tables, good images were formed having a high image density, good drying property, and freed of waving of paper when the images were exposed to visible light or ultraviolet radiation having a wavelength of 700 nm or less satisfying TG_{A} <Tᵢ <TG_{B}.

### Examples 13 to 14

Each of the components was mixed and stirred in the same manner as in black ink of Examples mentioned above according to the prescription shown in Table 4 followed by filtering with a polypropylene filter (Profile Star, average particle diameter of 1.5 µm, manufactured by NIHON PALL LTD.) to prepare each ink shown in Table 4.

Images were formed in the following manner and evaluated. The images were evaluated on the drying property and waving in the same manner as in Examples mentioned above.

### Image Forming

A cut sheet (Lumi Art Gloss, weight of 130 g/m², width of 521 mm, manufactured by Stora Enso AB) as recording medium was set in the image forming device illustrated in FIG. 4. A mixed color image of black, cyan, magenta, and yellow was printed with a printing resolution of 1,200 dpi.

The high gloss printing mode or the low gloss printing mode was selected. The ink was discharged in the sequence of black, cyan, magenta, and yellow in the high gloss printing mode and yellow, magenta, cyan, and black in the low gloss printing mode.

The UV-LED lamp (Semray UV 4003, manufactured by Heraeus K.K.) exposed the recording medium to the light under the conditions shown in Table below.

The reeling device, the adjustment of the strength of irradiation of the irradiator, adjustment of the conveying speed of the recording medium, measuring of the surface temperature Tᵢ of image, and pre-heaters were the same as Examples mentioned above.

### Image Density

The density of the image formed on the recording medium with an amount of ink attached of 0.9 µL/cm² was measured with an image densitometer (X-Rite eXact, manufactured by X-Rite Inc.). The image density was evaluated according to the following criteria. The grades S, A, and B are allowable.

### Evaluation Criteria of Black

S: Image density of 2.5 or greater
A: Image density of from 2.3 to less than 2.5
B: Black image density of from 2.0 to less than 2.3
C: Image density of less than 2.0

### Evaluation Criteria of Cyan

S: Image density of 2.5 or greater
A: Image density of from 2.3 to less than 2.5
B: Image density of from 2.0 to less than 2.3
C: Image density of less than 2.0

### Evaluation Criteria of Magenta

S: Image density of 2.3 or greater
A: Image density of from 2.2 to less than 2.3
B: Image density of from 2.0 to less than 2.2
C: Image density of less than 2.0

### Evaluation Criteria of Yellow

S: Image density of 1.4 or greater
A: Image density of from 1.3 to less than 1.4
B: Image density of from 1.2 to less than 1.3
C: Image density of less than 1.2

The results are shown in Table below.

**Table 4**

| | | Example 13 | | | |
|---|---|---|---|---|---|
| Coloring material | Black pigment dispersion (Pigment solids content: 15 percent by mass) | 40.0 | | | |
| | Cyan pigment dispersion (Pigment solid content: 15 percent by mass) | | 23.3 | | |
| | Magenta pigment dispersion (Pigment solid content: 15 percent by mass) | | | 40.0 | |
| | Yellow pigment dispersion (Pigment solid content: 15 percent by mass) | | | | 26.7 |
| Organic solvent | 3-Methoxy-3-ethyl-1-propanol | | | | |
| | 3-Methyl-1,3-butane diol | 5.0 | 5.0 | 5.0 | 5.0 |
| | 1,3-Butane diol | 15.0 | 15.0 | 15.0 | 15.0 |
| | 2-Propyl-1,3-pentane diol | 2.0 | 2.0 | 2.0 | 2.0 |
| Resin | Styrene acrylic resin emulsion 1 (solid content of 30 percent by mass, Tg of 160 degrees C) | | | | |
| | Styrene acrylic resin emulsion 2 (solid content of 30 percent by mass, Tg of 120 degrees C) | | | | |
| | Styrene acrylic resin emulsion 3 (solid content of 30 percent by mass, Tg of 90 degrees C) | 10.0 | | | |
| | Styrene acrylic resin emulsion 4 (solid content of 30 percent by mass, Tg of 60 degrees C) | | | | |
| | Styrene acrylic resin emulsion 5 (solid content of 30 percent by mass, Tg of 45 degrees C) | 3.3 | 20.0 | 13.3 | 23.3 |
| | Styrene acrylic resin emulsion 6 (solid content of 30 percent by mass, Tg of 30 degrees C) | | | | |
| | Styrene acrylic resin emulsion 7 (solid content of 30 percent by mass, Tg of 0 degrees C) | | | | |
| | Urethane resin emulsion (solid content of 31 percent by mass, Tg of -22.02 degrees C) | | | | |
| Surfactant | Silicone surfactant | 1.0 | 1.0 | 1.0 | 1.0 |
| Water | Deionized water | 23.7 | 33.7 | 23.7 | 27.0 |
| Total (Percent by mass) | | 100 | | | |
| Amount of moisture (percent by mass) | | 67.0 | 47.7 | 33.0 | 43.3 |
| Drying method | Drying method | UV-LED | | | |
| | Wavelength (nm) | 395 | | | |
| Surface temperature Tᵢ of image | | 70 | 70 | 70 | 70 |
| Image Density | Image Density | 2.6 | 2.7 | 2.3 | 1.4 |
| | Interpretation | S | S | S | S |
| Drying property | Drying energy (mJ/cm²) | 1300 | 1200 | 1300 | 1200 |
| | Interpretation | S | S | S | S |
| Waving of paper | Interpretation | S | S | S | S |

| | | Example 14 | | | |
|---|---|---|---|---|---|
| Coloring material | Black pigment dispersion (Pigment solids content: 15 percent by mass) | 40.0 | | | |
| | Cyan pigment dispersion (Pigment solid content: 15 percent by mass) | | 23.3 | | |
| | Magenta pigment dispersion (Pigment solid content: 15 percent by mass) | | | 40.0 | |
| | Yellow pigment dispersion (Pigment solid content: 15 percent by mass) | | | | 26.7 |
| Organic solvent | 3-Methoxy-3-ethyl-1-propanol | | | | |
| | 3-Methyl-1,3-butane diol | 5.0 | 5.0 | 5.0 | 5.0 |
| | 1,3-Butane diol | 15.0 | 15.0 | 15.0 | 15.0 |
| | 2-Propyl-1,3-pentane diol | 2.0 | 2.0 | 2.0 | 2.0 |
| Resin | Styrene acrylic resin emulsion 1 (solid content of 30 percent by mass, Tg of 160 degrees C) | | | | |
| | Styrene acrylic resin emulsion 2 (solid content of 30 percent by mass, Tg of 120 degrees C) | | | | |
| | Styrene acrylic resin emulsion 3 (solid content of 30 percent by mass, Tg of 90 degrees C) | 10.0 | 20.0 | 13.3 | 23.3 |
| | Styrene acrylic resin emulsion 4 (solid content of 30 percent by mass, Tg of 60 degrees C) | | | | |
| | Styrene acrylic resin emulsion 5 (solid content of 30 percent by mass, Tg of 45 degrees C) | 3.3 | | | |
| | Styrene acrylic resin emulsion 6 (solid content of 30 percent by mass, Tg of 30 degrees C) | | | | |
| | Styrene acrylic resin emulsion 7 (solid content of 30 percent by mass, Tg of 0 degrees C) | | | | |
| | Urethane resin emulsion (solid content of 31 percent by mass, Tg of -22.02 degrees C) | | | | |
| Surfactant | Silicone surfactant | 1.0 | 1.0 | 1.0 | 1.0 |
| Water | Deionized water | 23.7 | 33.7 | 23.7 | 27.0 |
| Total (Percent by mass) | | 100 | | | |
| Amount of moisture (percent by mass) | | 67.0 | 47.7 | 33.0 | 43.3 |
| Drying method | Drying method | UV-LED | | | |
| | Wavelength (nm) | 395 | | | |
| Surface temperature Tᵢ of image | | 70 | 70 | 70 | 70 |
| Image Density | Image Density | 2.6 | 2.3 | 2.1 | 1.2 |
| | Interpretation | S | A | B | B |
| Drying property | Drying energy (mJ/cm²) | 1300 | 2200 | 2400 | 2200 |
| | Interpretation | S | B | B | B |
| Waving of paper | Interpretation | S | S | S | S |

As seen in the results shown in Tables, good color images were formed having a high image density, good drying property, and freed of waving of paper when the images were exposed to visible light or ultraviolet radiation having a wavelength of 700 nm or less satisfying TGc <Tᵢ.

Numerous additional modifications are possible in light of the above teachings. It is therefore to be understood that, within the scope of the above teachings, the present disclosure may be practiced otherwise than as specifically described herein. All such modifications are intended to be included within the scope of the present appended claims.

## Claims

1. An image forming device (10;400;1000) comprising:
a black ink comprising water, an organic solvent, carbon black, a resin A, and a resin B;
a black ink applying device (410k;101) configured to apply the black ink to form an image on a recording medium; and
a non-contact type heating device including an irradiator (54;301) configured to expose the recording medium onto which the black ink has been applied to visible light or ultraviolet radiation having a wavelength of 700 nm or less,
wherein the resin A and the resin B satisfy the following relationship: Tg_{A} < Tᵢ < Tg_{B}, where Tg_{A} represents a glass transition temperature of the resin A, Tg_{B} represents a glass transition temperature of the resin B, and Ti represents a surface temperature of the image on the recording medium immediately after the recording medium is exposed to the visible light or ultraviolet radiation.

2. The image forming device (10;400;100) according to claim 1, wherein the resin A and the resin B comprise styrene acrylic resin.

3. The image forming device (10;400;100) according to claim 1 or 2, wherein 20 degrees C ≤ Tg_{A} ≤ 50 degrees C, 80 degrees C ≤ Tg_{B} ≤ 150 degrees C, and 50 degrees C < Tᵢ < 80 degrees C.

4. The image forming device (10;400;100) according to any one of claims 1 to 3, further comprising:
a color ink comprising water, an organic solvent, a coloring material, and a resin C; and
a color ink applying device (410y;410c;410m;101) configured to apply the color ink to the recording medium,
wherein Tg_{C} < Tᵢ, where Tg_{C} represents a glass transition temperature of the resin C.

5. An image forming method comprising:
applying a black ink to form an image on a recording medium; and
exposing the recording medium onto which the black ink has been applied to visible light or ultraviolet radiation having a wavelength of 700 nm or less,
wherein the black ink comprises water, an organic solvent, carbon black, a resin A, and a resin B,
wherein the resin A and the resin B satisfy the following relationship: Tg_{A} < Tᵢ < Tg_{B}, where Tg_{A} represents a glass transition temperature of the resin A, Tg_{B} represents a glass transition temperature of the resin B, and Ti represents a surface temperature of the image on the recording medium immediately after the recording medium is exposed to the visible light or ultraviolet radiation.

## Patentansprüche

1. Bilderzeugungsvorrichtung (10; 400; 1000), Folgendes umfassend:
eine schwarze Tinte, die Wasser, ein organisches Lösungsmittel, Ruß, ein Harz A und ein Harz B umfasst;
eine Vorrichtung (410k; 101) zum Auftragen schwarzer Tinte, die konfiguriert ist, um die schwarze Tinte aufzutragen, um ein Bild auf einem Aufzeichnungsmedium zu erzeugen; und
eine berührungslose Heizvorrichtung, die eine Bestrahlungseinrichtung (54; 301) einschließt, die konfiguriert ist, um das Aufzeichnungsmedium, auf das die schwarze Tinte aufgebracht wurde, sichtbarem Licht oder ultravioletter Strahlung mit einer Wellenlänge von 700 nm oder weniger auszusetzen,
wobei das Harz A und das Harz B die folgende Beziehung erfüllen: Tg_{A} < Tᵢ < Tg_{B}, worin Tg_{A} eine Glasübergangstemperatur des Harzes A darstellt, Tg_{B} eine Glasübergangstemperatur des Harzes B darstellt, und Ti eine Oberflächentemperatur des Bildes auf dem Aufzeichnungsmedium, unmittelbar nachdem das Aufzeichnungsmedium dem sichtbaren Licht oder der ultravioletten Strahlung ausgesetzt wurde, darstellt.

2. Bilderzeugungsvorrichtung (10; 400; 100) nach Anspruch 1, wobei das Harz A und das Harz B Styrol-Acrylharz umfassen.

3. Bilderzeugungsvorrichtung (10; 400; 100) nach Anspruch 1 oder 2, wobei 20 Grad C ≤ Tg_{A} ≤ 50 Grad C, 80 Grad C ≤ Tg_{B} ≤ 150 Grad C, und 50 Grad C < Tᵢ < 80 Grad C.

4. Bilderzeugungsgerät (10; 400; 100) nach einem der Ansprüche 1 bis 3, ferner Folgendes umfassend:
eine farbige Tinte, die Wasser, ein organisches Lösungsmittel, ein Färbematerial und ein Harz C umfasst; und
eine Vorrichtung (410y; 410c; 410m; 101) zum Auftragen farbiger Tinte, die zum Auftragen der farbigen Tinte auf das Aufzeichnungsmedium konfiguriert ist,
wobei Tg_{C} < Tᵢ, worin Tg_{C} eine Glasübergangstemperatur des Harzes C darstellt.

5. Bilderzeugungsverfahren, Folgendes umfassend:
Auftragen einer schwarzen Tinte, um ein Bild auf einem Aufzeichnungsmedium zu erzeugen; und
Aussetzen des Aufzeichnungsmediums, auf das die schwarze Tinte aufgetragen wurde, gegenüber sichtbarem Licht oder ultravioletter Strahlung, die eine Wellenlänge von 700 nm oder weniger aufweist,
wobei die schwarze Tinte Wasser, ein organisches Lösungsmittel, Ruß, ein Harz A und ein Harz B umfasst,
wobei das Harz A und das Harz B die folgende Beziehung erfüllen: Tg_{A} < Tᵢ < Tg_{B}, worin Tg_{A} eine Glasübergangstemperatur des Harzes A darstellt, Tg_{B} eine Glasübergangstemperatur des Harzes B darstellt, und Ti eine Oberflächentemperatur des Bildes auf dem Aufzeichnungsmedium, unmittelbar nachdem das Aufzeichnungsmedium dem sichtbaren Licht oder der ultravioletten Strahlung ausgesetzt wurde, darstellt.

## Revendications

1. Dispositif de formation d'image (10 ; 400 ; 1000) comprenant :
une encre noire comprenant de l'eau, un solvant organique, du noir de carbone, une résine A et une résine B ;
un dispositif d'application d'encre noire (410k ; 101) configuré pour appliquer l'encre noire pour former une image sur un support d'impression ; et
un dispositif chauffant de type sans contact incluant un irradiateur (54 ; 301) configuré pour exposer le support d'impression sur lequel l'encre noire a été appliquée à de la lumière visible ou à un rayonnement ultraviolet ayant une longueur d'onde égale ou inférieure à 700 nm,
dans lequel la résine A et la résine B satisfont à la relation suivante : Tg_{A} < Tᵢ < Tg_{B}, où Tg_{A} représente une température de transition vitreuse de la résine A, Tg_{B} représente une température de transition vitreuse de la résine B, et Ti représente une température de surface de l'image sur le support d'impression immédiatement après l'exposition du support d'impression à la lumière visible ou au rayonnement ultraviolet.

2. Dispositif de formation d'image (10 ; 400 ; 100) selon la revendication 1, dans lequel la résine A et la résine B comprennent une résine styrène-acrylique.

3. Dispositif de formation d'image (10 ; 400 ; 100) selon la revendication 1 ou 2, dans lequel 20 degrés C ≤ Tg_{A} ≤ 50 degrés C, 80 degrés C ≤ Tg_{B} ≤ 150 degrés C, et 50 degrés C < Tᵢ < 80 degrés C.

4. Dispositif de formation d'image (10 ; 400 ; 100) selon l'une quelconque des revendications 1 à 3, comprenant en outre :
une encre de couleur comprenant de l'eau, un solvant organique, une matière colorante, et une résine C ; et
un dispositif d'application d'encre de couleur (410y ; 410c ; 410m ; 101) configuré pour appliquer l'encre de couleur sur le support d'impression,
dans lequel Tg_{C} < Tᵢ, où Tg_{C} représente une température de transition vitreuse de la résine C.

5. Procédé de formation d'image comprenant :
l'application d'une encre noire pour former une image sur un support d'impression ; et
l'exposition du support d'impression sur lequel l'encre noire a été appliquée à de la lumière visible ou un rayonnement ultraviolet ayant une longueur d'onde inférieure ou égale à 700 nm,
dans lequel l'encre noire comprend de l'eau, un solvant organique, du noir de carbone, une résine A et une résine B,
dans lequel la résine A et la résine B satisfont à la relation suivante : Tg_{A} < Tᵢ < Tg_{B}, où Tg_{A} représente une température de transition vitreuse de la résine A, Tg_{B} représente une température de transition vitreuse de la résine B, et Ti représente une température de surface de l'image sur le support d'impression immédiatement après l'exposition du support d'impression à la lumière visible ou au rayonnement ultraviolet.
